# EUROPEAN PATENT APPLICATION

(11) **EP 4 636 875 A1**
(43) Date of publication of application: **22.10.2025**
(21) Application number: 24170948.4
(22) Date of filing: 18.04.2024
(51) Int. Cl.: H01M 10/04, H01M 10/613, H01M 10/625, H01M 10/647, H01M 10/6556, H01M 50/209, H01M 50/224, H01M 50/249, H01M 50/271, H01M 50/30

(54) **BATTERY PACK AND METHOD OF MANUFACTURING THE SAME**

(71) Applicant: Samsung SDI Co., Ltd., Yongin-si, Gyeonggi-do 17084 (KR)
(72) Inventor: Bloder, Martin, 8261 Sinabelkirchen (AT)
(74) Representative: Gulde & Partner

(57) **Abstract**

The present disclosure refers to a battery pack (100). The battery pack (10) includes a plurality of battery cells (10) with a housing (20) including a bottom member (21), a plurality of side walls (22, 23, 24, 25) and a top member (30), wherein the bottom member (21), the plurality of side walls (22, 23, 24, 25) and the top member (30) form an interior accommodation space in which the plurality of battery cells (10) is accommodated. The battery pack (100) includes at least one among the plurality side walls (22, 23, 24, 25), the top member (30) and the bottom member (21) are formed by a plurality of metal sheets (41, 41', 41"; 42; 44, 44', 44") which are roll bonded to each other. Further, the battery pack (100) includes at least one cooling channel (40, 40', 40") is formed between bonding areas (43, 43', 43") of the plurality of metal sheets (41, 41', 41"; 42; 44, 44', 44"). In addition, the battery pack (100) includes at least one crash channel (45; 45'-1; 45'-2) is formed between bonding areas (43, 43', 43") of the plurality of the metal sheets (41, 41', 41"; 42; 44, 44', 44").

## Description

### Field of the Disclosure

The present disclosure relates to a battery pack and a method of manufacturing the same. Furthermore, the present disclosure refers to a battery system including the battery pack and a vehicle with such battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a highpower rechargeable battery.

Battery modules can be constructed either in a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the cells is required.

Current battery packs which accommodate a plurality of battery cells either consist of solid structures which need additional cooling plates or the battery packs are formed by extruded profiles both for the supporting frame as well as for the coolant channels.

Battery packs which incorporate additional cooling plates into the battery pack have an increased number of parts to be assembled together. This implies that the assembly effort is increased since more manufacturing steps are required.

Battery packs which are produced through extruded profiles to build the housing and to incorporate the cooling channels therein requires complicated housing assembly operations. In addition, extruded profiles have inflexible design limitations with respect to the cooling layout.

In both cases manufacturing costs are relatively high so that a reduction of costs is desirable.

Furthermore, battery packs need structures to resist crashes or external impacts to enhance the safety during operation. This, however, requires even further additional parts and assembly effort to ensure a desired impact resistance.

In addition, while simplifying the manufacturing process a substantial mechanical strength should be provided to enhance structural integrity when in use which may further allow an avoidance of additional framing.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery pack is provided including a plurality of battery cells. The battery pack includes a housing with a bottom member, a plurality of side walls and a top member, wherein the bottom member, the plurality of side walls and the top member form an interior accommodation space accommodating the plurality of battery cells. At least one among the plurality side walls, the top member and the bottom member includes a plurality of metal sheets which are roll-bonded to each other. The at least one cooling channel is formed between bonding areas of the plurality of metal sheets. The at least one crash channel is formed between bonding areas of the plurality of the metal sheets.

According to another aspect of the present disclosure, a method of manufacturing a battery pack includes the following steps. The method includes the step of a) providing a housing including a bottom member, a plurality of side walls and a top member, wherein the bottom member, the plurality of side walls and the top member form an interior accommodation space accommodating a plurality of battery cells. The method further includes the step of b) roll-bonding a plurality of metal sheets with each other to form at least one among the plurality of side walls, the top member and the bottom member. The method further includes the step of c) inflating the plurality of metal sheets to form at least one cooling channel between bonding areas of the plurality of metal sheets. The method further includes the step d) inflating the plurality of metal sheets to form at least one crash channel between bonding areas of the plurality of metal sheets.

Yet another aspect of the present disclosure refers to a battery system including the battery pack. Another aspect is a vehicle including the battery system.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1: illustrates a schematic perspective view of a battery pack without a top member according to an embodiment of the invention,
- FIG. 2: illustrates a schematic perspective view of a battery pack with the top member according to an embodiment of the invention,

- FIG. 3: illustrates a perspective view of a battery pack with a top cover according to an embodiment of the invention,
- FIG. 4: illustrates a top view of the battery pack shown in FIG. 3,
- FIG. 5: illustrates a cross-sectional view of the battery pack according to line A-A as indicated in FIG. 4,
- FIG. 6: illustrates a cross-sectional view of the battery pack according to line B-B as indicated in FIG. 4, and
- FIG. 7: illustrates a method of manufacturing a battery pack according to an embodiment of the disclosure.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery pack is provided including a plurality of battery cells. The battery pack includes a housing with a bottom member, a plurality of side walls and a top member, wherein the bottom member, the plurality of side walls and the top member form an interior accommodation space in which the plurality of battery cells is accommodated. At least one among the plurality side walls, the top member and the bottom member include a plurality of metal sheets which are roll-bonded to each other. The at least one cooling channel is formed within the plurality of metal sheets between bonding areas where the plurality of metal sheets are roll-bonded. The at least one crash channel is formed between the plurality of metal sheets in unbonded areas between bonding areas where the plurality of the metal sheets are roll-bonded.

The side walls together with the bottom member and also the top member constitute a housing frame or housing. The crash channel may be referred to in other word as an impact absorbing channel. The cooling channel may be configured to carry a coolant while the crash channel remains without coolant. The roll bonding refers to particular form of connecting or bonding metal sheets with each other. In practice, two metal sheets are passed through a pair of flat rollers exposed to sufficient pressure to bond the metal sheets. The pressure is set high enough to deform the metals and reduce the combined thickness. The formation of the cooling channels by inflating may be provided by coating (with release agent or separation agent) a desired cooling channel layout on one among the metal sheets according to the desired cooling cannels to be formed. Then, only the bare or uncoated metal surfaces bond in the roll bonding process. These areas refer to the bonding areas. The un-bonded areas correspond to the areas where crash channels or cooling channels can be produced by inflating through, for example, applying pressure and/or heat so that channels can be formed. For example, a pressure generating device like a pump, a compressor or other sources that can cause high fluid pressure may be connected to an end, e.g. a port, of the to-be inflated cooling channel and/or crash channel, i.e. the unbonded areas thereof, so that a fluid pressure, for example for air or coolant, causes inflation to form the at least one cooling channel or the at least one crash channel. A limitation of the inflation can be achieved by the battery cells in a state where the battery cells are installed so that the inflation of the respective channel adapts and thus compensates the tolerances of the battery cells. In alternative or in addition, to reach a determined shape for the at least one cooling channel or the at least one crash channel, a contour defining member may be provided which limits extension for the inflation and provides a defined shape. Depending on the detailed design, the crash channels may require (only) one port to inflate each channel, or they can all be interconnected. In order to connect the channel, whether crash channel or cooling channel to the pressurized medium, a welded, soldered or otherwise very well-connected connection to the respective channel may be an advantage. For to improve the connections, a hose sleeve or a pipe may be directly welded to the channel that is to be inflated. The metals of the different metal sheets may be the same metal or different metal. The roll-bonding thus allows to integrate cooling channels and crash channels directly in the housing without further assembly parts. On the inner side may mean the side directed to the accommodation space or the battery cells. On the outer side may mean the side directed away from the accommodation space or the battery cells. The fixation of the different roll bonding components, bottom and top member, as well as vertical cell stack separating coolant channels in inner walls can be performed by any of the conventional means of connecting sheet metals such as welding, gluing, bolting, riveting or through plastic deformation of specific extensions of the sheets. Where and/or how coolant inlets and connections between the cooling channels are implemented is very flexible and various routing variants are possible. For example, each cell stack may include a corresponding coolant inlet and outlet or the entire battery pack may include one coolant inlet and coolant outlet.

Accordingly, the present disclosure has the advantage that the battery pack with the housing can easily incorporate additional cooling channels and crash channels resulting in a reduction in the number of parts required for the assembly making use of the roll-bonding. By providing additionally inflated areas in the same housing through inflating the crash channels, the crash loads can be absorbed and distributed without additional parts needed. Thus, by simply adding another layer of inflated roll bonded metal to the housing an efficient impact protection can be added without requiring separate crash protection members in the manufacturing process. Thus, compared to prior arts that may have the same cooling and safety functionalities, building a complete battery pack structure from roll-bonded sheet metal including cooling and crash absorbing channels can be achieved without additional parts so that manufacturing costs can be reduced.

According to an embodiment, at least one among the plurality side walls, the top member and the bottom member include an inner metal sheet, an outer metal sheet and an intermediate metal sheet disposed between the inner metal sheet and outer metal sheet which are roll bonded to each other, wherein the at least one cooling channel and the at least one crash channel are formed between different metal sheets. Thus, the cooling channels and the crash channels are spatially fluid-separated from one another though the intermediate metal sheet. In addition, the channels can be provided with using only three metal sheets in which the intermediate metal sheet serves as separating wall for both types of channels. Thus, energy absorbing crash structures are added to the roll-bonding structure requiring a minimal number of parts. In an embodiment, the underbody can be well protected in this manner. In addition or alternatively, the sides can be impact protected.

According to another embodiment, the at least one cooling channel is formed between the inner metal sheet and the intermediate metal sheet, and the at least one crash channel is formed between the intermediate metal sheet and the outer metal sheet. Thus, on one hand the cooling channels are close to the battery cells to reduced cooling distance and optimize cooling performance while on the other hand the battery pack is protected from outside impacts since energy is absorbed by the crash channels on the outer side. Therefore, performance of the battery pack in terms of cooling and impact safety is improved.

According to another embodiment, a third thickness of the intermediate metal sheet is larger than a first thickness of the inner metal sheet and a second thickness of the outer metal sheet. The intermediate metal sheet therefore has a task of optimizing mechanical robustness in the center of the housing frame to mechanically stabilize the battery pack and to support the inner and outer metal sheets.

According to another embodiment, the at least one cooling channel and the at least one crash channel extend in the bottom member in different directions and are crossing each other in the bottom member. By adding another layer of inflated roll bonded metal to the bottom of the bottom cooler an efficient underbody protection can be achieved without additional parts or manufacturing processes. Through the crossing of the cooling channels and the crash channels an improved stability can be reached since a channel lattice of the cooling channels and crash channels is provided. Therefore, impact resistance is increased due to the geometric structure involved. For example, the cooling channels and the crash channels may extend in perpendicular direction.

According to another embodiment, the at least one crash channel has a first height and the at least one cooling channel has a second height smaller than the first height. Therefore, the height of the crash channel is relatively large compared to the height of the cooling channel. That means, that the impact resistance and absorbance capability of the battery pack and the roll-bonded housing is enhanced.

According to another embodiment, the at least one cooling channel and the at least one crash channel are respectively formed by an inner metal sheet and an outer metal sheet on different side walls. Therefore, having roll-bonding sheets on the sides of the battery pack while adding additional inflated areas, the side-impact crash loads can be absorbed and distributed without additional parts or manufacturing processes. In addition, this allows to place the battery pack in in a vehicle, such that the cooling channels are in driving direction while the crash channels provide side protection. In this way, a separation of the channels in the side walls can be used.

According to another embodiment, the inner and the outer metal sheet are not roll-bonded at end portions, wherein a first end portion of the inner metal sheet and a second end portion of the outer metal sheet are bent away from each other and fixed with the top member and/or the bottom member. Therefore, having the dual metal sheets for providing the cooling channels and/or the crush channels, the embodiment makes use of the presence of the two metal sheets to form improved and stable connections of the roll bonded side walls. The connections may be detachable connection like screw or riveting connection, but also other forms of connecting like welding can be implemented.

According to another embodiment, the top cover member includes a vertically extending portion overlapping with at least one side wall, wherein the vertically extending portion includes at least one crash channel formed on an inner side of vertically extending portion. Thus, security against side crash impact channels and the impact resistance of the side walls can be enhanced by mere bending the top cover member holding additional inner crash channels.

According to an embodiment, at least one crash channel formed on the inner side of the vertically extending portion overlaps with at least one crash channel of the side wall that is overlapped by the vertically extending portion. In this case, the side portions are protected by a double layer of crash channels which increase the amount of impact that can be absorbed by the sides. Therefore, impact security and resistance are increased by allowing to overlap the crash channels.

According to an embodiment, a flat bottom cover is disposed below the at least one crash channel in the bottom portion. Thus, a stable support and a smooth outer contour can be provided despite of forming crash channels on the bottom for underbody protection.

According to an embodiment, the top member includes at least one cooling channel, wherein the top member is configured to elastically press against the plurality of battery cells by inflating the metal sheets in the top member for forming at least one cooling channel. By building the top member out of a roll-bonding cooler, the busbars as well as the cell top can be cooled ensuring cooling performance and better charging performance. The inflating of the cooling channels causes the tension or press contact. Thus, height varieties in the battery cells can be compensated and reliable contacts to the battery cells can be established to improve cooling performance. Here, the inflating may be performed after the cell stacks are assembled (cells, busbars, sensors, busbar covers and/or vent cover) and have been inserted into the battery pack. Then the top member is coupled on top of the whole assembly which may close off the battery cells from the cell venting area after inflating.

According to an embodiment, the at least one cooling channel of the top member is formed to overlap with the vent cover and the top member is configured to elastically press against at least a portion of the vent cover to fix the vent cover. This fixing is caused by the inflating of the top member to form the top cooling channel. Thus, the vent cover is held in place and fixated which reduces the amount of assembly requirements and fixation. In addition, the cell terminals and sensory connections are covered by liquid cooled sheet metal, so the thermal propagation characteristics are superior to current battery packs.

According to an embodiment, electrode terminals and vent cover are separated from each other by the at least one cooling channel in the top member. Since at least one cooling channel presses on the battery cells, it can be used when suitably arranged as a sealing that prevents hot gases to enter the electrode terminal area. In other words, the space in which the terminal electrodes are located and the space in which the venting cover is located are sealed from each other. Thus, the cooling channels close off the battery cells from the cell venting area.

According to an embodiment, the plurality of battery cells is stacked along inner compartments formed between the housing. A plurality of vent covers is provided each extending along the plurality of battery cells of a corresponding inner compartment. The vent covers include cell vents. The top member includes a plurality of openings overlapping with the corresponding vent cover. This allows the vent gases to easily escape the battery pack through the top member so that neighboring cells are not exposed to hot gases of neighboring battery cells.

According to an embodiment, the battery pack includes a top cover disposed on the top member and protruding from the top member to form an expansion chamber above the top member. The expansion chamber thus defines a space in which the hot gases can be received and collected.

According to another aspect of the present disclosure, a method of manufacturing a battery pack includes the following steps. The method includes the step of a) providing a housing including a bottom member, a plurality of side walls and a top member, wherein the bottom member, the plurality of side walls and the top member form an interior accommodation space in which a plurality of battery cells is accommodated. The method further includes the step of b) roll-bonding a plurality of metal sheets with each other to form at least one among the plurality of side walls, the top member and the bottom member formed by the plurality of metal sheets.

The method further includes the step of c) inflating the plurality of metal sheets to form at least one cooling channel between the plurality of metal sheets between bonding areas where the plurality of metal sheets is roll-bonded. The method further includes the step d) inflating the plurality of metal sheets to form at least one crash channel between the plurality of metal sheets between bonding areas where the plurality of metal sheets is roll-bonded. The advantages can follow from the above battery packs. Further embodiments can be inferred from the above description and are not repeated for the sake of conciseness.

A battery system including the battery pack and a vehicle including the battery system are provided which inherit the above advantages.

### Specific Embodiments

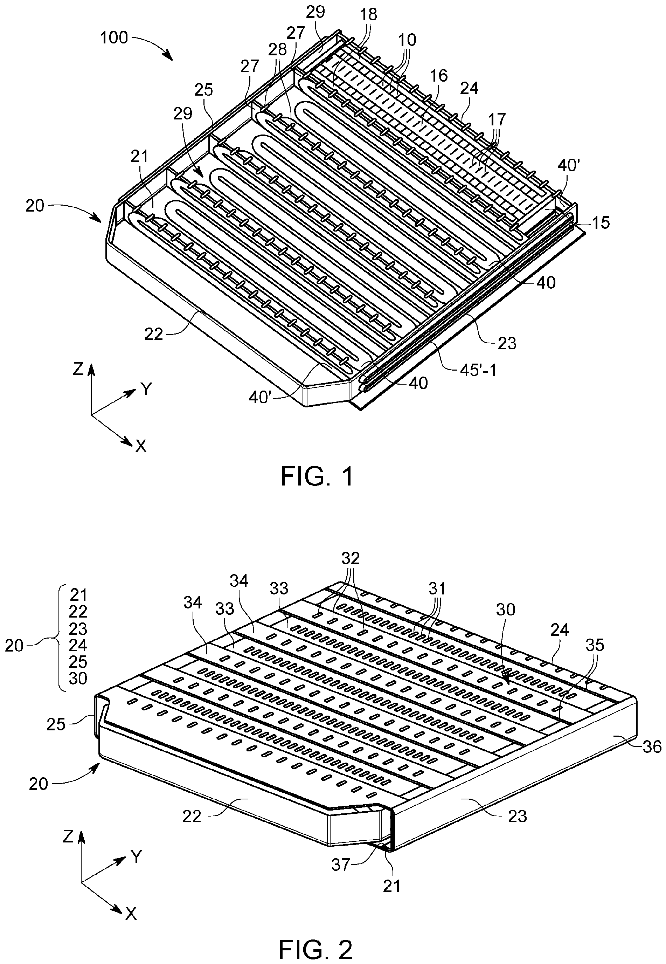

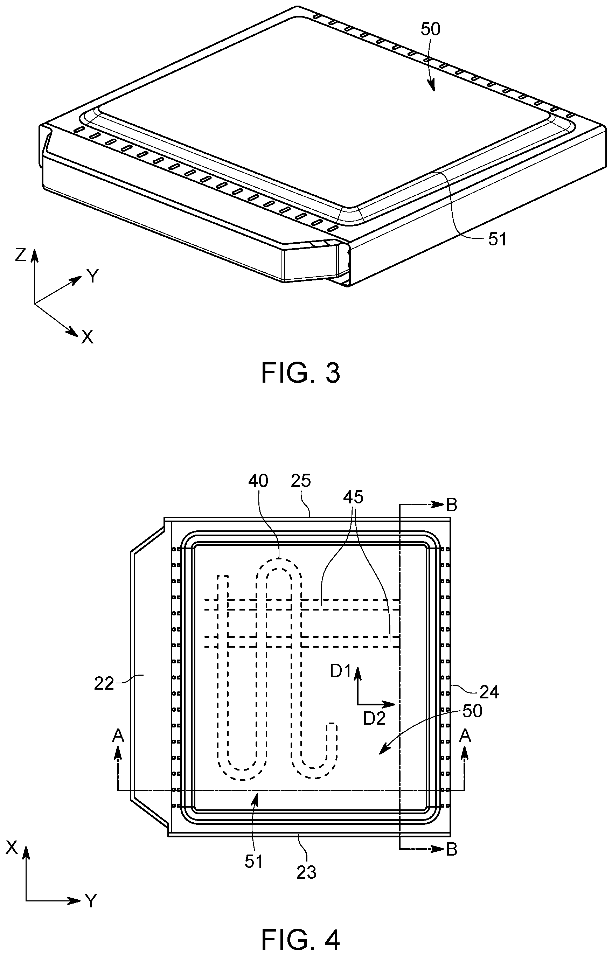

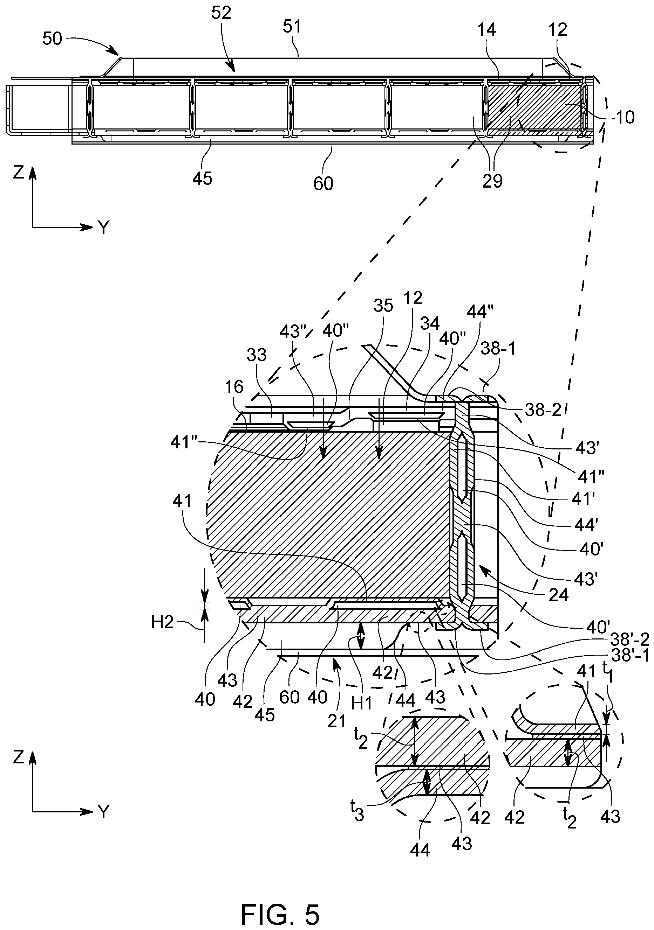

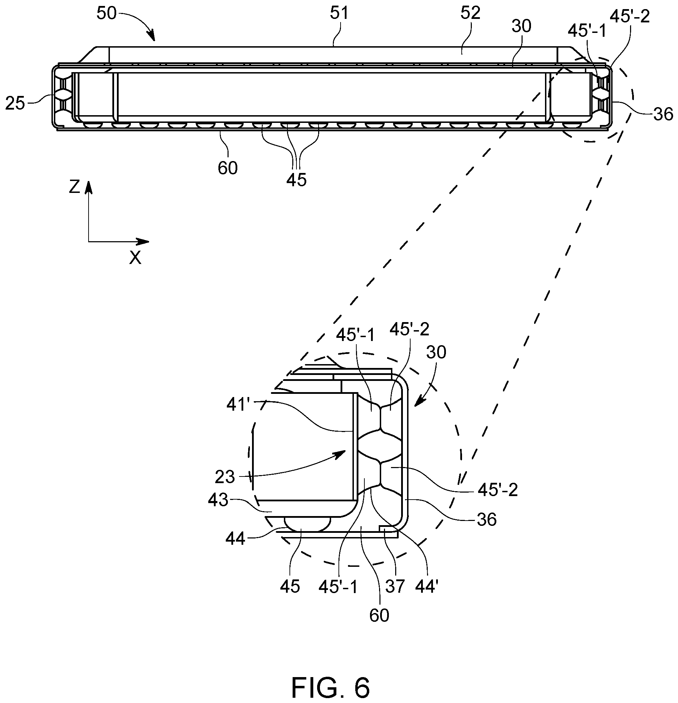

FIG. 1 is a perspective view of a battery pack 100 without a top member according to an embodiment of the invention and FIG. 2 is a schematic perspective view of a battery pack 100 with a top member 30. FIG. 3 is a perspective view of a battery pack 100 with a top cover 50 according to an embodiment of the invention. FIG. 4 illustrates a top view of the battery pack 100 shown in FIG. 3. FIG. 5 illustrates a cross-sectional view of the battery pack 100 according to line A-A as indicated in FIG. 4. FIG. 6 illustrates a cross-sectional view of the battery pack 100 according to line B-B as indicated in FIG.4. In the following, the battery pack 100 will be described with reference to the various FIGs. 1 to 4.

Referring to FIGs. 1 and 2, a battery pack 100 is disclosed. The battery back 100 includes a plurality of battery cells 10. In the present example, the battery cells 10 are prismatic-shaped but the invention is not restricted thereto. Each of the battery cells 10 may include a first electrode terminal 12 and a second electrode terminal 14 of opposite polarity as schematically indicated in FIG. 5.

The battery pack 100 includes a housing 20. The housing 20 includes a bottom member 21 and a plurality of side walls 22, 23, 24, 25. For example, the housing 20 may include a first side wall 22 and a third side wall 24 opposite to each other. Further, the housing 20 may include a second side wall 23 and a fourth side wall 25 opposite to each other. The housing 20 may further include a top member 30 with an example shown in FIG. 2.

The bottom member 21, the plurality of side walls 22, 23, 24, 25 and the top member 30 define an inner accommodation space of the housing 20. The plurality of battery cells 10, as for example shown in FIG. 1, are accommodated therein. The housing 20 may further include one more inner walls 27 which divide the accommodation space into a plurality of compartments 29. In the example of FIG. 1, five compartments 29 are provided but the invention is not restricted thereto.

In the example, the battery cells 10 are stacked in the compartments 29 of the battery pack, wherein this is illustrated in FIG. 1 for one among the compartments. An additional end plate 15 may be provided to stabilize the stack of the plurality of battery cells 10. In some embodiments, on both sides or on one side such end plate 15 may be provided, for example, as swelling protection. The inner walls 27 may also include cooling channels for cooling of the battery stacks from the sides.

According to embodiments, at least one among the plurality side walls 22, 23, 24, 25, the top member 30 and/or the bottom member 21 are formed by a plurality of metal sheets 41, 41', 41"; 42; 44, 44', 44" (see FIG. 5) which are roll-bonded with each other. For example, the entire housing 20 is formed by roll-bonded metal sheets 41, 41', 41"; 42; 44, 44', 44" according to embodiments of the invention.

The roll-bonded metal sheets 41, 41', 41"; 42; 44, 44', 44" are used to provide a plurality of cooling channels 40, 40', 40" in the housing, i.e., the housing frame. These cooling channels 40, 40', 40" are formed between the metal sheets 41, 41', 41"; 42; 44, 44', 44" and therefore within the housing frame. The cooling channels 40, 40', 40" may be formed between the plurality of metal sheets 41, 41', 41"; 42; 44, 44', 44" and may be formed by a process of inflation, e.g., by applying pressure to unbonded areas. The inflation is performed between bonding areas 43, 43', 43' where the plurality of metal sheets 41, 41', 41"; 42; 44, 44', 44" are roll-bonded. The cooling channels 40, 40', 40' may be formed between bonding areas 43, 43', 43' of the the plurality of metal sheets 41, 41', 41"; 42; 44, 44', 44". In the other words, the cooling channels 40, 40', 40' may be formed in unbonded areas. The unbonded areas to be inflated may be predetermined to provide a desired cooling channel layout.

Further, the roll-bonded metal sheets 41, 41', 41"; 42; 44, 44', 44" are used to provide a plurality of crash channels 45; 45'-1; 45'-2. The crash channels 45; 45'-1; 45'-2 are as well formed between the plurality of metal sheets 41, 41', 41"; 42; 44, 44', 44" and therefore are integrated within the housing frame. The crash channels 45; 45'-1; 45'-2 may be as well formed by inflation, e.g., by applying pressure to the unbonded areas. The inflation is performed between bonding areas 43, 43', 43" where the plurality of the metal sheets 41, 41', 41"; 42; 44, 44', 44" are roll-bonded. The unbonded areas to be inflated may be predetermined to provide a desired crash channel layout. Since the metal sheets 41, 41', 41"; 42; 44, 44', 44" are used to integrate both crash channels 45; 45'-1; 45'-2 and cooling channels 40, 40', 40", cooling performance and crash resistance can be enhanced with a reduced amount of assembly steps needed. The inflating of the at least one crash channel 45; 45'-1; 45'-2 and/or the at least one cooling channels 40, 40', 40" is described further below.

Where and/or how coolant inlets (here not shown) and/or connections between cooling channels 40, 40', 40" are implemented is very flexible and various routing variants are possible. For example, each cell stack may include a corresponding coolant inlet and outlet or the entire battery pack 100 may include one coolant inlet and coolant outlet.

Referring now to FIG. 5, the bottom member 21 of the battery pack 100 includes three metal sheets 41, 42, 44, see the enlarged insets. In other embodiments, also the side walls may include three metal sheets as explained in the following in the example of the bottom member 21. The three metal sheets 41, 42, 44 in the bottom member 21 include an inner metal sheet 41, an outer metal sheet 44 and an intermediate metal sheet 42. The intermediate metal sheet 42 is disposed between the inner metal sheet 41 and the outer metal sheet 44. The intermediate metal sheet 42 is roll-bonded with the inner metal sheet 41 and is roll-bonded with the outer metal sheet 44. An example of the respective bonding areas 43, for both cases, is demonstrated in the magnified inserts referring to the bonded parts of respective pairs of metal sheets 41, 42 and 42, 44.

As can be seen in FIG. 5, the at least one cooling channel 40 and at least one crash channel 45 are formed between different metal sheets 41, 42, 44. Thus, the crash channel 45 and the at least one cooling channel 40 are fluid-separated from each other by the intermediate metal sheet 42 so that the coolant in the cooling channels 40, 40', 40" is separated from the crash channels 45.

In detail, when referring to FIG. 5, the cooling channels 40 are formed between the inner metal sheet 41 and the intermediate metal sheet 42. The crash channels 45 are formed between the intermediate metal sheet 42 and the outer metal sheet 44. Therefore, the crash channels 45 are on the outside to absorb an external impact caused by external forces while the coolant channels 40 are provided on the inner side thereby reducing thermal distance to the battery cells 10 to maximize heat conduction performance. Therefore, both cooling performance and structural safety can be enhanced.

The height of the metal sheets 41, 42, 44 can be set differently. For example, as indicated in the insets, a second thickness t2 of the intermediate metal sheet 42 is larger than a first thickness t1 of the inner metal sheet 41. Further, the second thickness t2 of the intermediate metal sheet 42 is also larger than the third thickness t3 of the outer metal sheet 44. These relations magnify rigidity of the intermediate metal sheet 42 which supports the bonding to the inner and outer metal sheets 41, 44. This increases the mechanical stability of the entire housing 20 or housing frame formed by the roll-bonded metal sheets.

Referring to the cross-sectional view in FIG. 5 and the schematic representation illustration in the top view of FIG. 4, the cooling channels 40 and the crash channels 45 extend in different directions. For example, the cooling channels 40 may extend in a first direction D1 (x-direction) and crash channels 45 extend in a second direction D2 (y-direction) perpendicular to the first direction D1. Thus, when viewed from a top view perspective as illustrated in FIG. 4, the cooling channels 40 and the crash channels 45 are crossing each other in the bottom member 21. The channels 40, 45 thus form a lattice when viewed from the top which improves structural robustness despite of the inclusion of both cooling channels 40 and crash channels 45 in the housing 20 (housing frame).

In addition, referring back to FIG. 5, the crash channels 45 have a first height H1. The cooling channels 40 corresponding thereto have a second height H2 smaller than the first height H1. Thus, since the crash channels 45 have a higher first height H1 compared to the second height H2, the crash channels 45 provide a relatively high deformation distance before an impact is transferred to the actual interior of the battery pack 100 including the battery cells 10. Therefore, impact resistivity can be enlarged when providing relatively high first height H1.

Referring to FIG. 1 in view of FIG. 4, the cooling channels 40' and the crash channels 45'-1 are respectively formed by an inner metal sheet 41' and an outer metal sheet 44' on side walls 22, 23, 24, 25. As can be seen in FIG. 5 to FIG. 6 or as well in FIG. 1, the cooling channels 40' and the crash channels 45'-1 are disposed on different side walls among the plurality of side walls 22, 23, 24, 25. For example, the cooling channels 40' are formed on the side walls 22, 24 as shown in FIG. 1 and FIG. 5. The crash channels 45'-1 are formed on the side walls 23, 25 as shown in FIG. 1 and FIG. 6. Thus, a particular crash/impact resistance can be established on the side walls 23, 25 while the side walls 22, 24 are used for increasing the cooling performance of the battery pack 100. For example, when used in a vehicle, the battery pack 100 may be installed such that the first direction D1 refers to a driving direction of the vehicle and the second direction D2 to a side direction of the vehicle. Thus, the side walls 23, 25 include an additional and increased side impact protection to increase operation safety.

Referring now to FIG. 5, the function of the roll-bonding in the side walls 22, 24 can be used to improve fixation. For example, an inner metal sheet 41' and an outer metal sheet 44' of the side walls 22, 24 are not roll-bonded at end portions 38-1, 38'-1; 38-2, 38'-2. A first end portion 38-1, 38'-1 of the inner metal sheet 41' and a second end portion 38-2, 38'-2 of the outer metal sheet 44' are bent away from each other and fixed with the top member 30 and/or the bottom member 21. For example, the first end portions 38-1, 38'-1 are connected with the outer metal sheet 44" of the top member 30. For example, the second end portions 38-2, 38'-2 are connected with the intermediate metal sheet 42 of the bottom member 21. Thus, the roll-bonded structure of the side walls having two metal sheets 41', 44' is used to enhance mechanical stability.

Referring back to FIGs. 1 and 6, the crash channels 45'-1 in the side walls 23, 25 are formed by inflating the outer metal sheet 44' in outward direction. The inner metal sheet 41' may remain flat. Thus, in other words, the crash channels 45'-1 are formed outside of the accommodation space. This may be fulfilled as well for the bottom member 21. Therefore, deformations may occur only on the outside depending on the amount of impact.

The impact resistance can be further improved by the top member 30. Referring to FIG. 6, the top member 30 includes a vertically extending portion 36. The vertically extending portion 36 overlaps with the side walls 23, 25. The vertically extending portion 36 may also include roll-bonded metal sheets as described above. In addition, the vertically extending portion 36 includes at least one crash channel 45'-2 formed on an inner side of the vertically extending portion 36 of the top member 30. Thus, an additional impact resistance to protect the side walls 23, 25 with respect to external impacts acting on the sides is provided. In other words, the impact absorbance of the side walls 23, 25 is further enhanced by the vertically extending portions 36 of the top member 30. A bent end portion 37 may be provided at the end of the vertically extending portion 36 which is connected with a bottom cover 60 to provide a stable fixation. The fixation can be done by any known means including for example riveting, bolting and/or welding.

In detail, when referring to FIG. 6, the crash channels 45'-2 are formed on the inner side of the vertically extending portion 36 overlap with the crash channels 45'-1 of the side walls 23, 25. Thus, on the side walls 23, 25, double crash channels 45'-1; 45'-2 are provided which increase the impact absorbance capability since by the positional overlap the crash channels 45'-1, 45'-2 work together to absorb impact by deformation.

As can be seen as well in FIG. 6, a bottom cover 60 is disposed below the crash channels 45 in the bottom member 21. Thus, due to the bottom cover 60 being below the crash channels 45, a stable support is ensured of the crash channels 45 formed in the outer side.

Referring now to the top member 30 referred to in FIGs. 1, 2 and FIG. 5 and as mentioned above, the plurality of battery cells 10 is stacked along the inner compartment 29 formed in the housing 20 as referred to in FIG. 1. The battery pack 100 includes a plurality of vent covers 16. For example, the vent covers 16 extend along the compartment to overlap the plurality of battery cells 10. In other embodiments, local vent covers can be provided for each battery cell 10 or battery cell group.

The vent covers 16 may include a plurality of safety vents 17 disposed on the plurality of battery cells 10 and corresponding to each of the battery cells 10. The vents 17 may act like a valve which allows hot gases to be released in a case of increased pressure, i.e. larger than a pressure threshold, in the respective battery cell 10. In addition, as shown in FIG. 1, busbar covers 18 may be provided which cover the respective electrode terminals (not shown in FIG. 1 since covered but identifiable in FIG. 5) of the plurality of battery cells 10 stacked in each compartment 29.

A top member 30 is shown in FIG. 2 which interacts with the above mentioned features. The top member 30 includes a plurality of vent openings 31. The vent openings 31 are arranged to be aligned with corresponding vents 17. These corresponding vents 17 are described above with respect to FIG. 1. Therefore, hot gases released from the battery cells 10 through the safety vents 17 and the vent cover 16 can easily pass through the top member 30 and thus out of the battery pack 100. Thus, the hot gases can be evacuated easily without interacting with neighboring battery cells 10.

In addition, a plurality of fastening members 28 on the inner walls 27 of the housing 20 and the side walls 22, 24 are provided as shown in FIG. 1. The fastening members 28 may be formed along the inner walls 27. In the example, the fastening members 28 are provided along the top of the inner walls 27 to engage with the top member 30. In this case, the fastening members 28 may be coupling flaps that have an elongation in an opposite direction. The corresponding top member 30 includes a plurality of fixation openings 32 aligned to overlap with or correspond to the plurality of fastening members 28.

Thus, the fastening members 28 can be passed through the corresponding fixation opening 32 to the be held on the top of the top member 30 in a coupling position to fasten, by each of the plurality of fastening members 28, the top member 30 with the other members of the housing 20. Due to the numerous fastening members 28 involved, a fixation can be established that can be easily released again to easily re-access the interior of the battery pack 100. However, the invention is not restricted to a particular form of coupling of the top member 30.

Referring now to FIG. 2 and FIG. 5, the top member 30 may include at least one cooling channel 40". Further, the top member 30 may be configured to elastically press against the plurality of battery cells 10. This may be achieved by inflating the cooling channels 40". The inflating may be performed after the the cell stack assemblies, i.e., battery cells 10 and optionally busbars, sensors, busbar covers 18 and/or vent covers 16 have been inserted into the battery pack 100. Since top of the battery cells 10 can be cooled by the top member 30 cooling performance can be improved due the tension or press contact. In an effect, height varieties in the battery cells 10 can be compensated and reliable contacts to the battery cells 10 can be established to improve cooling performance.

As shown in FIG. 5, the cooling channels 40" of the top member 30 can overlap with the vent cover 16 at least to a portion to hold the vent cover 16 in place. In addition, cooling channels 40" overlap with the electrode terminals 12, 14 and may press against the electrode terminals. Thus, cooling performance can be increased.

In addition, terminals 12, 14 and vent cover 16 are spatially separated from each other by the inflated channels 40", as can be seen in FIG. 5. Since the cooling channel 40" presses on the battery cell 10, it can be used as a sealing that prevents hot gases to enter the electrode terminal area from the venting area. Thus, the cooling channels 40" of the top member 30 close off the battery cells 10 from the cell venting area.

Referring to FIG. 2 and FIG. 5, the top member 30 includes a cross section profile with a plurality of stepped portions 35 between a plurality of alternating lowered top member portions 33 and protruded top member portions 34. The protruded top member portions 34 may extend along the inner walls 27 of the compartments 29. The lowered top member portions 333 may extend to overlap the vent cover 16 (or the central region above the plurality of battery cells 10) along the compartments 29 while the protruded top member portions 34 may overlap the plurality of terminals 12, 14 and/or the respective busbar cover 18.

The stepped portions 35 in the top member 30 refers to a pre-configuration that is adapted to compensate for the height difference between where the electrode terminals 12, 14 and/or busbar cover 18 are located and lowered top member portion 33 beside to where the electrode terminals are, e.g., where the vent cover 16 is located. Thus, the stepped portion 35 assists to reduce the amount of inflating needed in the top member 30 to establish the press contact with the battery cell 10 and/or the vent cover 16. Thus, thermal performance can be improved since the contact surface is increased.

In addition, when referring to FIGs. 3 and 4, a top cover 50 may be disposed on the top member 30. The top cover 50 protrudes from the top member 30 to form an expansion chamber 52 above the top member 30. The expansion chamber 52 is formed by a protruding portion 51 which defines an expansion volume therein. Thus, hot gases released through the vent openings 31 and/or the vents 17 can be collected in the expansion chamber 52.

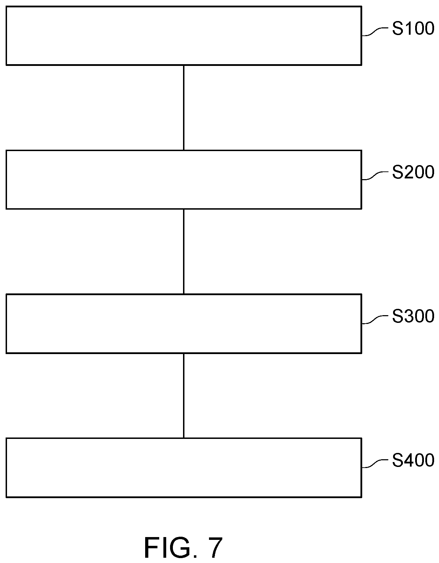

Referring now to FIG. 7, a method of manufacturing a battery pack 100 is disclosed therein. The method includes the step of providing S100 a housing 20 including a bottom member 21, a plurality of side walls 22, 23, 24, 25 and a top member 30, wherein the bottom member 21, the plurality of side walls 22, 23, 24, 25 and the top member 30 form an interior accommodation space in which a plurality of battery cells 10 is accommodated. Reference is made to the upper sections and FIGs. 1 to 6 for further steps discloses therein.

The method further includes roll-bonding S200 a plurality of metal sheets 41, 41', 41"; 42; 44, 44', 44" with each for the plurality of side walls 22, 23, 24, 25, the top member 30 and the bottom member 21 are formed by a plurality of metal sheets 41, 41', 41"; 42; 44, 44', 44".

The method further includes the step of inflating S300 the plurality of metal sheets 41, 41', 41"; 42; 44, 44', 44" to form at least one cooling channel 40, 40', 40" between bonding areas 43, 43', 43", where the plurality of metal sheets 41, 41', 41"; 42; 44, 44', 44" are roll-bonded. The method includes the step of inflating S400 the plurality of metal sheets 41, 41', 41 "; 42; 44, 44', 44" to form at least one crash channel 45, 45'-1; 45'-2 between bonding areas 43, 43', 43" where the plurality of metal sheets 41, 41', 41"; 42; 44, 44', 44" are roll-bonded. For example, a pressure generating device like a pump, a compressor or other sources that can cause high fluid pressure may be connected to an end, e.g. a port, of the to-be inflated cooling channel and/or crash channel, i.e. the unbonded areas, so that a fluid pressure, for example for air or coolant, causes inflation to form the at least one cooling channel 40, 40', 40" or the at least one crash channel 45, 45'-1; 45'-2. A limitation of the inflation can be achieved by the battery cells in a state where the battery cells 10 are installed so that the inflation of the respective channel adapts and thus compensates the tolerances of the battery cells 10. In alternative or in addition, to reach a determined shape for the at least one cooling channel 40, 40', 40" or the at least one crash channel 45, 45'-1; 45'-2, a contour defining member may be provided which limits extension for the inflation and provides a defined shape. Depending on the detailed design, the to-be-inflated crash channels 45, 45'-1; 45'-2 may require (only) one port to inflate each channel, or they can all be interconnected. In order to connect the to-be-inflated channel, whether the to-be-inflated crash channel or cooling channel to the pressurized medium, a welded, soldered or otherwise very well-connected connection to the respective channel may be an advantage. For to improve the connections, a hose sleeve or a pipe may be directly welded to the channel that is to be inflated. The further steps can be derived from the above description. The steps of inflating may be performed after the cell stacks are assembled (cells, busbars, sensors, busbar covers and/or vent cover) and have been inserted into the battery pack for the top member so that a press contact can be provided by the inflating.

In summary, a battery pack 100 is provided with a housing 20 that can easily incorporate additional cooling channels and crashing channels resulting in a reduction in the number of parts required for the assembly making use of the roll-bonding. Thus, by simply adding another layer of inflated roll bonded metal sheets to the housing an efficient impact protection can be added without requiring separate crash protection members in the manufacturing process. Further features refer to an improvement of this impact resistance and ensuring good colling performance.

### Reference signs

- 100: battery pack

- 10: battery cell
- 12: first electrode terminal
- 14: second electrode terminal
- 15: end plate
- 16: vent cover
- 17: (safety) vent
- 18: busbar cover

- 20: housing / housing frame
- 21: bottom member
- 22: (first) side wall
- 23: (second) side wall
- 24: (third) side wall
- 25: (fourth) side wall
- 27: inner wall
- 28: fastening member
- 29: compartment

- 30: top member
- 31: vent opening
- 32: fixation opening
- 33: lowered (inwardly displaced) top member portion
- 34: protruded top member portion
- 35: stepped portion
- 36: vertically extending portion
- 37: bent end portion
- 38-1, 38'-1: first end portion
- 38-2, 38'-2: second end portion

- 40, 40', 40": cooling channel
- 41, 41', 41": inner metal sheet
- 42: intermediate metal sheet
- 43, 43', 43": bonding area
- 44, 44', 44": outer metal sheet
- 45, 45'-1; 45'-2: crash channel

- H1: first height
- H2: second height

- t1: first thickness
- t2: second thickness
- t3: third thickness

- 50: top cover
- 51: protruding portion
- 52: expansion chamber

- 60: bottom cover

- S100: providing a housing
- S200: roll-bonding metal sheets
- S300: inflating metal sheets to produce cooling channels
- S400: inflating metal sheets to produce crash channels

## Claims

1. A battery pack (100), comprising:
a plurality of battery cells (10), and
a housing (20) comprising a bottom member (21), a plurality of side walls (22, 23, 24, 25) and a top member (30), wherein the bottom member (21), the plurality of side walls (22, 23, 24, 25) and the top member (30) form an interior accommodation space accommodating the plurality of battery cells (10),
wherein at least one among the plurality side walls (22, 23, 24, 25), the top member (30) and the bottom member (21) are formed by a plurality of metal sheets (41, 41', 41"; 42; 44, 44', 44") which are roll bonded to each other,
wherein at least one cooling channel (40, 40', 40") is formed between bonding areas (43, 43', 43") of the plurality of metal sheets (41, 41', 41"; 42; 44, 44', 44"), and
wherein at least one crash channel (45; 45'-1; 45'-2) is formed between bonding areas (43, 43', 43") of the plurality of the metal sheets (41, 41', 41"; 42; 44, 44', 44").

2. The battery pack (100) according to claim 1, wherein at least one among the plurality side walls (22, 23, 24, 25), the top member (30) and the bottom member (21) comprise an inner metal sheet (41), an outer metal sheet (44) and an intermediate metal sheet (42) disposed between the inner metal sheet (41) and outer metal sheet (42) which are roll bonded to each other, wherein at least one cooling channel (40) and at least one crash channel (45) are formed between different metal sheets (41, 42, 44).

3. The battery pack (100) according to claim 2, wherein the at least one cooling channel (40) is formed between the inner metal sheet (41) and the intermediate metal sheet (42), and the at least one crash channel (45) is formed between the intermediate metal sheet (42) and the outer metal sheet (44).

4. The battery pack (100) according to any of the preceding claims 2 to 3, wherein a second thickness (t2) of the intermediate metal sheet (42) is larger than a first thickness (t1) of the inner metal sheet (41) and a third thickness (t3) of the outer metal sheet (44).

5. The battery pack (100) according to any of the preceding claims 2 to 4, wherein the at least one cooling channel (40) and the at least one crash channel (45) extend in the bottom member (21) in different directions and are crossing each other in the bottom member (21).

6. The battery pack (100) according to any of the preceding claims 1 to 5, wherein the at least one crash channel (45; 45'-1; 45'-2) has a first height (H1) and the at least one cooling channel (40, 40', 40") has a second height (H2) smaller than the first height (H1).

7. The battery pack (100) according to any of the preceding claims 1 to 6, wherein the least one cooling channel (40') and the at least one crash channel (45'-1) are respectively formed by an inner metal sheet (41') and an outer metal sheet (44') on different side walls (22, 23, 24, 25).

8. The battery pack (100) according to any of the preceding claims 1 to 6, wherein an inner and an outer metal sheet (41', 44') of at least one side wall (22, 24) are not roll-bonded at end portions (38-1, 38'-1; 38-2, 38'-2), wherein a first end portion (38-1, 38'-1) of the inner metal sheet (41') and a second end portion (38-2, 38'-2) of the outer metal sheet (44') are bent away from each other and fixed with the top member (30) and/or the bottom member (21).

9. The battery pack (100) according to any of the preceding claims 1 to 8, wherein at least one crash channel (45'-1) in a side wall is formed by inflating the outer metal sheet (44') in outward direction.

10. The battery pack (100) according to any of the preceding claims 1 to 9, wherein the top member (30) comprises a vertically extending portion (36) overlapping with at least one side wall (22, 24), wherein the vertically extending portion (36) comprises at least one crash channel (45'-2) formed on an inner side.

11. The battery pack (100) according to claim 10, wherein the at least one crash channel (45'-2) formed on the inner side of the vertically extending portion (36) overlaps with the at least one crash channel (45'-1) of the at least one side wall (22, 24).

12. The battery pack (100) according to any of the preceding claims 1 to 11, wherein a bottom cover (60) is disposed below at least one crash channel (45) in the bottom member (21).

13. The battery pack (100) according to any of the preceding claims 1 to 12, wherein:
the plurality of battery cells (10) is stacked along at least one inner compartment (29) formed in the housing (20),
a plurality of vent covers (16) comprising vents (17) disposed on the plurality of battery cells (10) of each compartment (29), and
the top member (30) comprising a plurality of vent openings (31) aligned to overlap with corresponding vents (17).

14. The battery pack (100) according to claim 13, further comprising a top cover (50) disposed on the top member (30) and protruding from the top member (30) to form an expansion chamber (52) above the top member (30).

15. A method of manufacturing a battery pack (100), wherein the method comprises the steps of:
a) providing (S100) a housing (20) comprising a bottom member (21), a plurality of side walls (22, 23, 24, 25) and a top member (30), wherein the bottom member (21), the plurality of side walls (22, 23, 24, 25) and the top member (30) form an interior accommodation space accommodating a plurality of battery cells (10);
b) roll-bonding (S200) a plurality of metal sheets (41, 41', 41"; 42; 44, 44', 44") with each other to form at least one among the plurality of side walls (22, 23, 24, 25), the top member (30) and the bottom member (21),
c) inflating (S300) the plurality of metal sheets (41, 41', 41"; 42; 44, 44', 44") to form at least one cooling channel (40, 40', 40") between bonding areas (43, 43', 43") of the plurality of metal sheets (41, 41', 41"; 42; 44, 44', 44"), and
d) inflating (S400) the plurality of metal sheets (41, 41', 41"; 42; 44, 44', 44") to form at least one crash channel (45, 45'-1; 45'-2) between bonding areas (43, 43', 43") of the plurality of metal sheets (41, 41', 41"; 42; 44, 44', 44").

## Amended claims

### Amended claims in accordance with Rule 137(2) EPC.

1. A battery pack (100), comprising:
a plurality of battery cells (10), and
a housing (20) comprising a bottom member (21), a plurality of side walls (22, 23, 24, 25) and a top member (30), wherein the bottom member (21), the plurality of side walls (22, 23, 24, 25) and the top member (30) form an interior accommodation space accommodating the plurality of battery cells (10),
wherein at least one among the plurality side walls (22, 23, 24, 25), the top member (30) and the bottom member (21) are formed by a plurality of metal sheets (41, 41', 41"; 42; 44, 44', 44") which are roll bonded to each other,
wherein at least one cooling channel (40, 40', 40") is formed between bonding areas (43, 43', 43") of the plurality of metal sheets (41, 41', 41"; 42; 44, 44', 44"),
wherein at least one crash channel (45; 45'-1; 45'-2) is formed between bonding areas (43, 43', 43") of the plurality of the metal sheets (41, 41', 41"; 42; 44, 44', 44"), **characterized in that**,
wherein at least one among the plurality side walls (22, 23, 24, 25), the top member (30) and the bottom member (21) comprise an inner metal sheet (41), an outer metal sheet (44) and an intermediate metal sheet (42) disposed between the inner metal sheet (41) and outer metal sheet (42) which are roll bonded to each other, wherein at least one cooling channel (40) and at least one crash channel (45) are formed between different metal sheets (41, 42, 44).

2. The battery pack (100) according to claim 1, wherein the at least one cooling channel (40) is formed between the inner metal sheet (41) and the intermediate metal sheet (42), and the at least one crash channel (45) is formed between the intermediate metal sheet (42) and the outer metal sheet (44).

3. The battery pack (100) according to any of the preceding claims 1 to 2, wherein a second thickness (t2) of the intermediate metal sheet (42) is larger than a first thickness (t1) of the inner metal sheet (41) and a third thickness (t3) of the outer metal sheet (44).

4. The battery pack (100) according to any of the preceding claims 1 to 3, wherein the at least one cooling channel (40) and the at least one crash channel (45) extend in the bottom member (21) in different directions and are crossing each other in the bottom member (21).

5. The battery pack (100) according to any of the preceding claims 1 to 4, wherein the at least one crash channel (45; 45'-1; 45'-2) has a first height (H1) and the at least one cooling channel (40, 40', 40") has a second height (H2) smaller than the first height (H1).

6. The battery pack (100) according to any of the preceding claims 1 to 5, wherein the least one cooling channel (40') and the at least one crash channel (45'-1) are respectively formed by the inner metal sheet (41') and the outer metal sheet (44') on different side walls (22, 23, 24, 25).

7. The battery pack (100) according to any of the preceding claims 1 to 6, wherein an inner and an outer metal sheet (41', 44') of at least one side wall (22, 24) are not roll-bonded at end portions (38-1, 38'-1; 38-2, 38'-2), wherein a first end portion (38-1, 38'-1) of the inner metal sheet (41') and a second end portion (38-2, 38'-2) of the outer metal sheet (44') are bent away from each other and fixed with the top member (30) and/or the bottom member (21).

8. The battery pack (100) according to any of the preceding claims 1 to 7, wherein at least one crash channel (45'-1) in a side wall is formed by inflating the outer metal sheet (44') in outward direction.

9. The battery pack (100) according to any of the preceding claims 1 to 8, wherein the top member (30) comprises a vertically extending portion (36) overlapping with at least one side wall (22, 24), wherein the vertically extending portion (36) comprises at least one crash channel (45'-2) formed on an inner side.

10. The battery pack (100) according to claim 9, wherein the at least one crash channel (45'-2) formed on the inner side of the vertically extending portion (36) overlaps with the at least one crash channel (45'-1) of the at least one side wall (22, 24).

11. The battery pack (100) according to any of the preceding claims 1 to 10, wherein a bottom cover (60) is disposed below at least one crash channel (45) in the bottom member (21).

12. The battery pack (100) according to any of the preceding claims 1 to 11, wherein:
the plurality of battery cells (10) is stacked along at least one inner compartment (29) formed in the housing (20),
a plurality of vent covers (16) comprising vents (17) disposed on the plurality of battery cells (10) of each compartment (29), and
the top member (30) comprising a plurality of vent openings (31) aligned to overlap with corresponding vents (17).

13. The battery pack (100) according to claim 12, further comprising a top cover (50) disposed on the top member (30) and protruding from the top member (30) to form an expansion chamber (52) above the top member (30).

14. A method of manufacturing a battery pack (100), wherein the method comprises the steps of:
a) providing (S100) a housing (20) comprising a bottom member (21), a plurality of side walls (22, 23, 24, 25) and a top member (30), wherein the bottom member (21), the plurality of side walls (22, 23, 24, 25) and the top member (30) form an interior accommodation space accommodating a plurality of battery cells (10);
b) roll-bonding (S200) a plurality of metal sheets (41, 41', 41"; 42; 44, 44', 44") with each other to form at least one among the plurality of side walls (22, 23, 24, 25), the top member (30) and the bottom member (21), wherein at least one among the plurality side walls (22, 23, 24, 25), the top member (30) and the bottom member (21) comprise an inner metal sheet (41), an outer metal sheet (44) and an intermediate metal sheet (42) disposed between the inner metal sheet (41) and outer metal sheet (42) which are roll bonded to each other,
c) inflating (S300) the plurality of metal sheets (41, 41', 41"; 42; 44, 44', 44") to form at least one cooling channel (40, 40', 40") between bonding areas (43, 43', 43") of the plurality of metal sheets (41, 41', 41"; 42; 44, 44', 44"), and
d) inflating (S400) the plurality of metal sheets (41, 41', 41"; 42; 44, 44', 44") to form at least one crash channel (45, 45'-1; 45'-2) between bonding areas (43, 43', 43") of the plurality of metal sheets (41, 41', 41"; 42; 44, 44', 44"),
wherein at least one cooling channel (40) and at least one crash channel (45) are formed between different metal sheets (41, 42, 44).
